Europäisches Patentamt

European Patent Office

Office européen des brevets

(11) Veröffentlichungsnummer: **0 156 980**
**A1**

(12) # EUROPÄISCHE PATENTANMELDUNG

(21) Anmeldenummer: 84115136.8

(22) Anmeldetag: 11.12.84

(51) Int. Cl.⁴: **E 05 B 49/00,** G 06 K 19/06, H 01 H 27/10

(30) Priorität: 15.03.84 DE 3409611

(43) Veröffentlichungstag der Anmeldung: 09.10.85
Patentblatt 85/41

(84) Benannte Vertragsstaaten: AT DE FR GB IT

(71) Anmelder: Siemens Aktiengesellschaft, Berlin und
München Wittelsbacherplatz 2, D-8000 München 2 (DE)

(72) Erfinder: Dannhäuser, Friedrich, Dr.,
Freischützstrasse 17, D-8000 München 81 (DE)
Erfinder: Preissinger, Heinz, Dipl.-Phys., Enzianring 115,
D-8028 Taufkirchen (DE)
Erfinder: Schwaiger, Kurt, Dipl.-Ing.,
Destouchesstrasse 23, D-8000 München 40 (DE)

(54) **Anordnung zur Kennzeichnung von elektronischen Schlüssel-/Schlosssystemen.**

(57) Eine Anordnung zur Kennzeichnung von elektronischen Schlüssel-/Schloßsystemen besteht aus matrixförmig angeordneten Leiterbahnen (m, n). Die Leiterbahnen (m, n) sind in getrennten Ebenen auf den Oberflächen eines isolierenden Trägers angeordnet und weisen direkte elektrische Verbindungen (Knoten K) zwischen Eingabe- und Ausgabeleitungen auf, wobei jedoch höchstens ein Knoten (K) je Spalte oder Zeile angeordnet ist.

EP 0 156 980 A1

0156980

Siemens Aktiengesellschaft        Unser Zeichen
Berlin und München               VPA  **84 P 1 2 1 6  E**

Anordnung zur Kennzeichnung von elektronischen Schlüs-
sel-/Schloßsystemen

Die Erfindung betrifft eine Anordnung zur Kennzeichnung
von insbesondere elektronischen Schlüssel-/Schloßsystemen mit Infrarot-Fernbedienung für Kraftfahrzeuge, welche aus matrixförmig angeordneten Leiterbahnen besteht.

Bei derartigen Systemen, die aus den DE-A 32 34 538 und
DE-A 32 34 539 bekannt sind, besitzen beispielsweise Sender
und Empfänger je einen Mikroprozessor mit nachfolgenden
Verstärkern und Infrarot-Sende- und Empfangseinrichtungen.
Diese Anordnung bietet in einfacher Weise eine große Anzahl
von Kodiermöglich- keiten, die beispielsweise bei einem
"m-Bit-Telegramm" $2^m$-Kombinationen ergibt, was z.B. mit m =
24 16 Millionen Kombinationsmöglichkeiten entspricht.
Mechanische Schlüssel haben dagegen nur ca. 10000 Möglichkeiten. Damit ist jedes einzelne Schlüssel-/Schloßsystem
eindeutig zu kennzeichnen und von anderen unterscheidbar zu
machen, wobei das eigentliche Steuerprogramm des Mikroprozessors bei allen System gleich ist. Es besteht jedoch
das Problem, wie die Kennzeichnung derartiger Systeme mit
solch großen Kombinationsmöglichkeiten in wirtschaftlicher
Weise zu realisieren ist.

Zur Kennzeichnung einfacherer Systeme ist es bekannt, diese
Kennzeichnung durch einen Auswahlschalter vorzunehmen, der
beispielsweise aus dem DE-U 800 5555 bekannt ist. Damit ist

Sac 1 Gae / 14.03.1984

es möglich beispielsweise 256 Varianten mit 8 Bit ($2^8 =$ 256) zu kennzeichnen, wobei je Bit ein Eingang erforderlich ist.

Eine derartige lineare Anordnung der Bits führt bei den oben angeführten Systemen jedoch zu einer mit einem Mikroprozessor wirtschaftlich nicht mehr vertretbaren Anzahl von Eingängen.

Es ist nun bekannt, daß das Problem, eine große Zahl von Systemen zu identifizieren, mit Diodenmatrizen realisiert werden kann. Hierbei bestimmen die elektrischen Verbindungen an bestimmten Kreuzungspunkten zwischen Zeilen und Spalten (Knoten) die Matrix. Diese Verbindungen werden mit Dioden hergestellt, so daß parallele Spalten bzw. Zeilen elektrisch entkoppelt sind. Bei derartigen Diodenmatrizen können deshalb beliebig viele Knoten ohne Einschränkungen gesetzt werden. Der Nachteil dieser Anordnungen besteht jedoch darin, daß sie für einen Serieneinsatz im Konsumbereich bei den genannten Schlüssel-/Schloßsystemen zu teuer sind.

Aufgabe der Erfindung ist es daher, eine Anordnung der eingangs genannten Art anzugeben, die es gestattet, die große Anzahl der Varianten mit einem Mikroprozessor zu identifizieren, die außerdem für eine große Stückzahl von Typensteckern geeignet sind, wobei jeder von ihnen einen individuell verschiedenen Code festlegt, kleine Abmessungen aufweist und die Kodierung am Ende der Systemherstellung ermöglicht. Ferner soll die genannte Anordnung preiswert herzustellen sein.

Diese Aufgabe wird erfindungsgemäß dadurch gelöst, daß die Leiterbahnen in getrennten Ebenen derart auf den Oberflächen eines isolierenden Trägers angeordnet sind, daß die spaltenförmig angeordneten Leiterbahnen auf der einen Trägerseite den Eingabe-(Ausgabe)-Leitungen und die zeilenförmig angeordneten Leiterbahnen auf der anderen Trägerseite den Ausgabe-(Eingabe)-Leitungen zugeordnet sind, daß sie direkte elektrische Verbindungen (Knoten) zwischen Eingabe-und Ausgabeleitungen besitzt, und daß je Spalte oder Zeile höchstens ein Knoten angeordnet ist.

Die erfindungsgemäße Anordnung weist den Vorteil auf, daß sie preiswert herzustellen ist und trotz der Beschränkung auf höchstens einen Knoten je Spalte oder Zeile gestattet, eine große Anzahl der Varianten mit dem Mikroprozessor zu identifizieren. Die angeführte Beschränkung ist erforderlich, da bei direkten elektrischen Verbindungen von Zeilen und Spalten diese elektrisch nicht entkoppelt sind, wodurch leicht eine Verfälschung der Matrix eintreten kann. Durch diese Beschränkung ergibt sich eine Vielfalt $Z_K$ der Kontaktmatrix von
$$Z_K = (n+1)^m,$$
mit m Spalten (Einleseleitungen ) und n Zeilen (Ausgabeleitungen). Die Vielfalt $Z_D$ einer Diodenmatrix gleicher Dimensionen beträgt dagegen:
$$Z_D = (2^m)^n = 2^{m \cdot n}.$$

Somit ist zwar $Z_K$ kleiner als $Z_D$, jedoch genügt eine geringe Erhöhung der Spaltenzahl m, um diese Einschränkung auszugleichen. Trotzdem ist die erfindungsgemäße

Anordnung wesentlich preiswerter als die bekannten
Diodenmatritzen. Als isolierender Träger eignet sich
beispielsweise eine Leiterplatte oder eine Kunststofffolie auf die die elektrischen Leiterbahnen mit den
bekannten Techniken wie z.B. Kaschieren, Aufdampfen mit
gegebenenfalls nachfolgender galvanischer Verstärkung,
selektiver Ätzung von entsprechend präparierten Trägermaterialien und dergleichen aufgebracht sind.

Gemäß einer vorteilhaften Ausgestaltung der Erfindung
sind die Leiterbahnen in einer rechteckförmigen Matrix
angeordnet. Bei gegebener Anzahl der Leitungen des Mikroprozessors hat bei Diodenmatritzen immer die quadratische Anordnung die größte Vielfalt, wogegen bei der
erfindungsgemäßen Kontaktmatrix eine rechteckige Form
vorteilhafter ist.

Beispiele für eine optimale Aufteilung einer gegebenen
Anzahl (n + m) von Zeilen und Spalten sind in der folgenden Tabelle angeführt.

| n | m | m + n | n/m | $Z_K$ | $Z_D$ |
|---|---|---|---|---|---|
| 3 | 5 | 8 | 0,6 | 1024 | 32768 |
| 4 | 8 | 12 | 0,5 | 390625 | $4,29.10^9$ |
| 5 | 12 | 17 | 0,417 | $2,18.10^9$ | $1,15.10^{18}$ |

Die notwendige Verknüpfung zwischen Zeilen und Spalten
der Kontaktmatrix geschieht vorteilhafterweise entweder
dadurch, daß zunächst alle Kreuzungspunkte zwischen den
Leiterbahnen elektrisch miteinander verbunden sind und
dann die nicht erforderlichen Verbindungen aufgetrennt

0156980

werden oder dadurch, daß zunächst überhaupt keine Verbindungen ausgeführt sind und die Knoten durch eine galvanische Verbindung, insbesondere Lötung, hergestellt werden.

Weitere Vorteile des Gegenstandes der Erfindung werden anhand der folgenden Ausführungsbeispiele erläutert.

In der dazugehörenden Zeichnung zeigen:

Fig. 1 ein Prinzipschaltbild und
die Fig. 2 und 3 zwei unterschiedliche Ausführungsformen

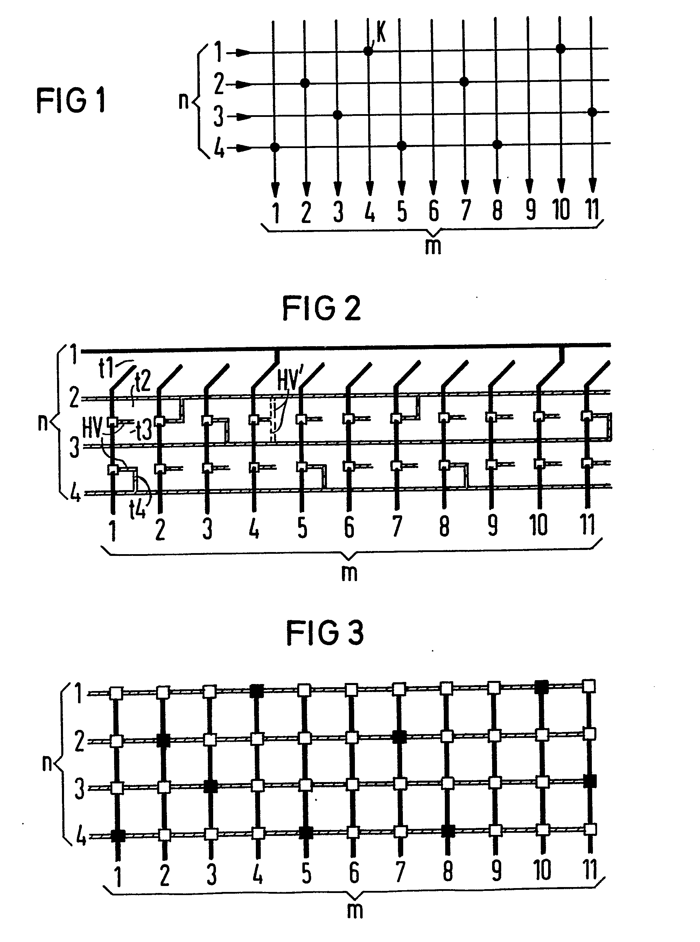

In der Fig. 1 ist das Prinzipschaltbild einer Typenmatrix für mehrfache Vielfalt dargestellt, die aus m-Eingabeleitungen (Spalten) zum Mikroprozessor und aus n-Ausgabeleitungen (Zeilen) vom Mikroprozessor besteht. Elektrische Verbindungen zwischen Zeilen und Spalten sind durch die Punkte K gekennzeichnet.

Bei der erfindungsgemäßen Anordnung sind Zeilenleitungen n und Spalteneitungen m in getrennten Ebenen eines isolierenden Trägers angeordnet wodurch die Abmessungen besonders klein gehalten werden können.

Die elektrische Verbindung von Zeilen- und Spaltenleitungen wird in zwei Ebenen ausgeführt, wobei die Verbindung an allen unerwünschten Kreuzungspunkten galvanisch durchtrennt wird, oder aber es werden die Kreuzungspunkte zunächst galvanisch offen gelassen und die elektrischen Verbindungen (Knoten) K an den gewünschten Punkten hergestellt.

Bei einer Anordnung gemäß Fig. 1, bei der die Knoten K Verbindungen von einer Ebene zur anderen bedeuten, ist das Kodieren durch Herstellen bzw. Lösen solcher Kontakte aus geometrischen Gründen jedoch schwierig.

In der Fig. 2 ist nun ein Ausführungsbeispiel dargestellt, bei dem das Kodieren wesentlich einfacher erfolgen kann. Hierbei sind Teile der Verbindung von der einen Leiterbahn zur anderen als Hilfsverbindung HV in den Leiterbahnebenen geführt, wo sie ohne Schwierigkeiten aufgetrennt werden können (HV') Hierbei sind alle Eingabeleitungen m und die Ausgabeleitung 1 beispielsweise auf der Vorderseite des isolierenden Trägers und die (gestrichelt gezeichneten) Ausgabeleitungen 2, 3, 4 auf der Rückseite angeordnet. Durchstoßpunkte von einer Seite des Trägers zur anderen sind durch Quadrate gekennzeichnet. Fehlende Verbindungen HV' zu den Ausgabeleitungen n bezeichnen Trennstellen. Diese entsprechen unverbundenen Kreuzungspunkten in Fig. 1, wobei die Figuren 1 und 2 denselben Code darstellen. Beispielsweise wird an der Eingabeleitung 1 "H" eingelesen, wenn Ausgabeleitung 4 "H" ist, da die Leiterbahnen an den Stellen t1, t2 und t3 getrennt und an der Stelle t4 verbunden sind. Eine weitere Ausführungsform ist in der Fig. 3 dargestellt, bei der ebenfalls die Eingabeleitungen m und die gestrichelt gezeichneten Ausgabeleitungen n in verschiedenen Ebenen des Trägers angeordnet sind. Die als Quadrat gekennzeichneten Kreuzungspunkte sind hierbei zunächst alle galvanisch verbunden. Die gewünschten Verbindungen werden bei dieser Ausführungsform dadurch erzeugt, daß an allen unerwünschten Kreuzungspunkten die Verbindung getrennt wird, indem diese Punkte beispielsweise am Ende der Systemherstellung durchbohrt oder durchstanzt und damit galvanisch aufgetrennt werden. Diese aufgetrennten Verbindungspunkte sind in der Fig . 3 durch nicht ausgefüllte Quadrate dargestellt, während die bestehenden galvanischen Verbindungen durch ausgefüllte Quadrate gekennzeichnet sind. Somit ist in der Fig. 3 wieder derselbe Code wie in den Figuren 1 und 2 dargestellt.

Eine weitere Möglichkeit besteht darin, daß zunächst alle Kreuzungspunkte in der Fig. 3 offen sind (z.B. gebohrte Löcher) und eine galvanische Verbindung an den gewünschten Stellen, z.B. durch Lötung zwischen den Leiterbahnebenen am Ende der Systemherstellung durchgeführt wird.

Neben den beschriebenen Anwendungen im Kraftfahrzeugbereich eignet sich die erfindungsgemäße Anordnung auch zur Kennzeichnung von Schlüssel-/Schloßsystemen mit IR-Fern-Steuerung im Installationsbereich, z.B.für Personen-Kontroll-Ausweis- und Überwachungssysteme und Lampensteuerung (Industrie- und Haushaltsbereich).

4 Patentansprüche
3 Figuren

<u>Patentansprüche</u>

1. Anordnung zur Kennzeichnung von insbesondere elektronischen Schlüssel-/Schloßsystemen mit Infrarot-Fernbedienung für Kraftfahrzeuge, welche aus matrixförmig angeordneten Leiterbahnen besteht, d a d u r c h  g e - k e n n z e i c h n e t,  daß die Leiterbahnen (m, n) in getrennten Ebenen derart auf den Oberflächen eines isolierenden Trägers angeordnet sind, daß die spaltenförmig angeordneten Leiterbahnen (m) auf der einen Trägerseite den Eingabe-(Ausgabe-) Leitungen und die zeilenförmig angeordneten Leiterbahnen (n) auf der anderen Trägerseite den Ausgabe-(Eingabe-) Leitungen zugeordnet sind, daß sie direkte elektrische Verbindungen (Knoten) zwischen Eingabe- und Ausgabeleitungen besitzt und daß je Spalte oder Zeile höchstens ein Knoten angeordnet ist.

2. Anordnung nach Anspruch 1, d a d u r c h  g e - k e n n z e i c h n e t,  daß die Leiterbahnen in einer rechteckförmigen Matrix angeordnet sind.

3. Anordnung nach Anspruch 1 oder 2, d a d u r c h  g e k e n n z e i c h n e t,  daß Hilfsverbindungen (HV) zwischen den Leiterbahnen (m, n) auf der Fläche einer Leiterbahnebene ausgeführt sind und nicht erforderliche Verbindungen (HV') aufgetrennt sind.

4. Anordnung nach Anspruch 1 oder 2, d a d u r c h  g e k e n n z e i c h n e t,  daß die Knoten durch eine galvanische Verbindung, insbesondere Lötung hergestellt sind.

0156980

1/1

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 824 421 (BOSCH) <br> * Figur 1; Seite 10, Zeile 1 - Seite 12, Zeile 11; Seite 13, Zeile 25 - Seite 14, Zeile 2 * <br><br> --- | 1,2 | E 05 B 49/00 <br> G 06 K 19/06 <br> H 01 H 27/10 |
| Y | FR-A-2 466 056 (BERMAN) <br> * Figur 2; Seite 5, Zeile 27 - Seite 6, Zeile 11 * | 1,2 | |
| A | <br> * Seite 6, Zeilen 5-11 * <br><br> --- | 4 | |
| A | US-A-3 171 100 (RAJCHMAN) <br> * Figur 5; Spalte 3, Zeile 20-45 * <br><br> ----- | 1-3 | |
| | | | RECHERCHIERTE SACHGEBIETE (Int. Cl.4) |
| | | | E 05 B <br> G 06 K <br> H 01 H |

Der vorliegende Recherchenbericht wurde für alle Patentansprüche erstellt.

| Recherchenort <br> DEN HAAG | Abschlußdatum der Recherche <br> 20-06-1985 | Prüfer <br> HERBELET J.C. |
|---|---|---|